# EUROPEAN PATENT APPLICATION

(11) **EP 4 631 831 A1**
(43) Date of publication of application: **15.10.2025**
(21) Application number: 23938218.7
(22) Date of filing: 31.10.2023
(51) Int. Cl.: B62D 25/20, B60K 1/04

(54) **REAR FLOOR STRUCTURE, REAR CASTING OF REAR FLOOR STRUCTURE AND VEHICLE**

(30) Priority: 23.05.2023 CN 202310589394
(71) Applicant: Chongqing Changan Automobile Co Ltd, Chongqing 400023 (CN)
(72) Inventor: YOU, Min, Chongqing 400023 (CN); CHE, Yueguang, Chongqing 400023 (CN); YAO, Shanming, Chongqing 400023 (CN)
(74) Representative: Schulz Junghans Patentanwälte PartGmbB
(86) International application number: PCT/CN2023/128926
(87) International publication number: WO 2024/239550

(57) **Abstract**

Disclosed are a rear floor structure, a rear casting of the rear floor structure, and a vehicle. The rear floor structure comprises a rear floor front section assembly (1) and a rear casting (2). An accommodating space for accommodating the rear floor front section assembly (1) is formed at the front end of the rear casting, two transverse sides of the rear casting are respectively connected to sill beams (3, 4) on two sides, and the bottom of the rear floor front section assembly is provided with a first sealing surface (A) used for forming a seal with a battery pack assembly, the bottom of each sill beam is provided with a second sealing surface (B) used for forming a seal with the battery pack assembly, there is a height difference between the first sealing surface and the second sealing surface, sealing reinforcement structures are arranged at the joint of the rear casting and the bill beam, a transition sealing surface (C) is formed on the sealing reinforcement structures, and the transition sealing surface is in smooth butt-joint with the first sealing surface and the second sealing surface in the transverse direction. According to the rear floor structure, the sealing surface of the rear floor is in smooth butt-joint with the sealing surface of the sill beam to form a continuous sealing surface, and a plurality of sealing reinforcement structures can be arranged in the longitudinal direction to adapt to vehicles of different wheelbases, so as to realize platform universalization.

## Description

### Field of the Invention

The present disclosure relates to a vehicle body structure, and specifically, to a rear floor structure, and furthermore, to a rear flooring structure rear casting and a vehicle.

### Background of the Invention

A rear floor front section assembly is an important component of a vehicle body. It plays an important role in supporting seats and occupants, and is essential for ensuring sealing performance and noise, vibration, and harshness (NVH) of a passenger compartment. Due to the existence of a battery system, a battery pack assembly is typically disposed under a passenger compartment in an electric vehicle. To ensure the sealing performance of the passenger compartment, a sealing strip is arranged between the battery pack assembly and a rear floor assembly for sealing.

The Chinese patent CN218558539 discloses a battery vehicle-body integrated structure and a vehicle. The battery-vehicle body integrated structure includes a vehicle body, a battery pack casing connected to the vehicle body, and a sealing layer. A lower body of the vehicle body includes two sill beams, a front compartment structure assembly, and a rear floor assembly, collectively forming a closed rectangular structure. A front portion of the battery pack casing is connected to the front compartment structure assembly, a lateral portion is connected to the sill beam, and a rear portion is connected to the rear floor assembly. A top portion of the battery pack casing has a first region serving as a floor panel of the vehicle body, and the sealing layer is located between the top portion of the battery pack casing and the vehicle body and is configured to fill a gap between the top portion of the battery pack casing and the vehicle body. The sealing layer is disposed around the first region. By taking the top portion of the battery pack casing as the vehicle floor panel, the integration level of the vehicle is enhanced, achieving vehicle lightweighting. The interior space of the passenger compartment located in the first region is sealed to be separated from the exterior space of the passenger compartment, preventing contaminants, liquids, and the like outside the passenger compartment from entering the passenger compartment via the gap between the top portion of the battery pack casing and the vehicle body, and ensuring the sealing performance and safety of the interior space of the passenger compartment. In actual situations, a height difference may be formed between a sealing surface of the rear floor assembly and a sealing surface of the sill beam. According to this technical solution, the sealing layer is simply disposed around the first region, which cannot ensure a sealing effect at a joint of the sealing surface of the rear floor assembly and the sealing surface of the sill beam. Moreover, with the continuous development of electric vehicles, the vehicle models are constantly evolving. This technical solution can only meet the requirements of a single vehicle model, cannot adapt to vehicle models with different wheelbases, and cannot achieve platform universalization.

### Summary of the Invention

A first objective of the present disclosure is to provide a rear floor structure, to address the problems in the prior art that a sealing effect at a joint cannot be ensured because a height difference exists between a sealing surface of a rear floor assembly of a vehicle body and a sealing surface of a sill beam, and the sealing requirements of vehicle models with different wheelbases cannot be met, thus failing to achieve platform universalization. A second objective of the present disclosure is to provide a rear floor structure rear casting. A third objective of the present disclosure is to provide a vehicle.

To achieve the foregoing objectives, the present disclosure adopts the following technical solutions.

In a first aspect, the present disclosure provides a rear floor structure, which includes a rear floor front section assembly and a rear casting. An accommodating space for accommodating the rear floor front section assembly is formed at a front end of the rear casting. Two transverse sides of the rear casting are respectively connected to sill beams on two sides. A first sealing surface for forming a seal with a battery pack assembly is formed on the bottom of the rear floor front section assembly, a second sealing surface for forming a seal with the battery pack assembly is formed at the bottom of each sill beam, and a height difference is formed between the first sealing surface and the second sealing surface. A sealing reinforcement structure is disposed at a joint of the rear casting and the sill beam, a transition sealing surface is formed on the sealing reinforcement structure, and the transition sealing surface is in smooth butt-joint with the first sealing surface and the second sealing surface in a transverse direction.

According to the foregoing technical means, because the transition sealing surface is formed on the sealing reinforcement structure, which is in smooth butt-joint with the first sealing surface and the second sealing surface which have the height difference, a battery pack sealing strip can smoothly transition from the joint of the rear casting and the sill beam, thereby ensuring sealing reliability.

Further, a plurality of sealing reinforcement structures are disposed at the joint of the rear casting and the sill beam at intervals in a longitudinal direction and separately extend in the transverse direction. The sealing reinforcement structures are sealing reinforcement ribs, two ends of each sealing reinforcement rib are respectively in butt-joint with the first sealing surface and the second sealing surface, and inclined planes of the sealing reinforcement ribs form the transition sealing surface.

According to the foregoing technical means, the plurality of sealing reinforcement structures are disposed on the rear casting in the longitudinal direction. This design enables the rear casting to meet sealing requirements of vehicle models with different wheelbases, thereby improving the platform universalization rate of the rear floor structure of the present disclosure. Moreover, the sealing reinforcement structures are designed as the reinforcement ribs, to enhance lateral rigidity of the rear floor structure, thereby improving side impact resistance of the overall vehicle. Furthermore, the inclined planes are convenient to machine and ensure high conformity with the battery pack sealing strip.

Further, a cross section of each sealing reinforcement rib is in an inverted trapezoidal shape, a lower base of the trapezoidal shape is located in the same plane as the first sealing surface, and an upper base of the trapezoidal shape is located in the same plane as the second sealing surface.

According to the foregoing technical means, the sealing reinforcement rib achieves smooth butt-joint with the first sealing surface and the second sealing surface.

Further, an included angle between the transition sealing surface and the first sealing surface ranges from 135° to 150°.

According to the foregoing technical means, a phenomenon that smooth transition cannot be achieved at the joint of the transition sealing surface and the first sealing surface due to an excessive small included angle between the transition sealing surface and the first sealing surface.

Further, the sealing reinforcement structures on the two transverse sides of the rear casting are disposed symmetrically.

According to the foregoing technical means, the transition sealing surfaces on the two transverse sides of the rear casting are in a one-to-one correspondence, to adapt to vehicle models with different wheelbases.

Further, the plurality of sealing reinforcement structures on the same side are disposed at equal intervals in the longitudinal direction.

According to the foregoing technical means, the platform universalization rate of the rear casting is improved.

Further, the rear casting includes a rear floor frame front section, a rear casting first longitudinal beam, and a rear casting second longitudinal beam. The rear casting first longitudinal beam and the rear casting second longitudinal beam are respectively disposed on two transverse sides of the rear floor frame front section, to form the accommodating space. The sill beams include a first sill beam and a second sill beam that are disposed symmetrically in the transverse direction. The rear casting first longitudinal beam is laterally connected to the first sill beam, and the rear casting second longitudinal beam is laterally connected to the second sill beam.

According to the foregoing technical means, the integration level of the rear casting is improved, and lap joints between spare parts are reduced.

Further, the rear casting first longitudinal beam and the rear casting second longitudinal beam are symmetrically structured, and the first sill beam and the second sill beam are symmetrically structured. The rear casting first longitudinal beam includes a first lap joint edge and a second lap joint edge, the first lap joint edge is connected to a top portion of the first sill beam, and the second lap joint edge is connected to a side portion of the first sill beam.

According to the foregoing technical means, the rear casting is connected to the sill beam via the first lap joint edge and the second lap joint beam, to reduce a number of required connecting members, and improve bending stiffness and side impact resistance.

Further, the rear floor front section assembly includes a rear floor front section and a rear floor front transverse beam assembly. The rear floor front transverse beam assembly is fixedly connected to the rear floor front section. The first sealing surface is formed at the bottom of the rear floor front section. A connecting flange is formed on a side, where the rear floor frame front section, the rear casting first longitudinal beam, and the rear casting second longitudinal beam are located, of the accommodating space, an edge of the real floor front section is connected to a lower end surface of the connecting flange, and an edge of the rear floor front transverse beam assembly is connected to an upper end surface of the connecting flange.

According to the foregoing technical means, the edge of the rear floor front section is designed to be connected to the lower end surface of the connecting flange, to avoid impact of the thickness of the connecting flange on smoothness of the joint of the transition sealing surface and the first sealing surface.

Further, the second lap joint edge extends downward beyond the lower end surface of the connecting flange, and the sealing reinforcement structures are disposed between a lower portion of the second lap joint edge and the connecting flange.

According to the foregoing technical means, lateral rigidity of the sealing reinforcement structures and smoothness of the joint of the transition sealing surface and the first sealing surface and the joint of the transition sealing surface and the second sealing surface are improved.

Further, the rear floor front transverse beam assembly includes a rear floor front transverse beam, a rear floor first longitudinal beam, and a rear floor second longitudinal beam. The rear floor front transverse beam is connected to a front end of the rear floor first longitudinal beam and a front end of the rear floor second longitudinal beam. Two transverse ends of the rear floor front transverse beam are respectively in lap-joint with the rear casting first longitudinal beam and the rear casting second longitudinal beam. A rear end of the rear floor first longitudinal beam and a rear end of the rear floor second longitudinal beam are in lap-joint with the rear floor frame front section.

According to the foregoing technical means, the rear floor front transverse beam forms a transverse force transferring path, to improve structural strength of the rear floor front section, thereby meeting the requirements for impact resistance of the entire vehicle.

Further, a portion, corresponding to a battery pack sealing strip, of the rear floor front section is recessed downward to form a groove that transversely penetrates through the rear floor front section, and a bottom surface of the groove serves as the first sealing surface. The rear floor front transverse beam assembly further includes a sealing surface reinforcement member that is disposed in the transverse direction. The sealing surface reinforcement member is an upwardly protruding structure corresponding to the groove, and the sealing surface reinforcement member is connected with the groove cooperatively to form an enclosed cavity structure in a vertical direction.

According to the technical means, the enclosed cavity structure in the vertical direction enhances structural strength of the first sealing surface. The transversely penetrating groove corresponds to the sealing reinforcement structures on the two transverse sides, forming a continuous structure to meet the sealing requirements.

Further, the rear flooring frame front section, the rear casting first longitudinal beam, the rear casting second longitudinal beam, and the sealing reinforcement structures are integrally formed.

According to the foregoing technical means, precision, loading performance, and structural strength of the rear casting are improved.

**In** a second aspect, the present disclosure provides a rear floor structure rear casting, which is the rear casting in the rear floor structure according to the first aspect of the present disclosure.

**In** a third aspect, the present disclosure provides a vehicle, which includes a vehicle body. The vehicle body includes the rear floor structure according to the first aspect of the present disclosure or the rear floor structure rear casting according to the second aspect of the present disclosure.

The present disclosure has the following beneficial effects:
(1) The transversely extending sealing reinforcement structures are disposed at the joint of the rear casting and the rear section of the sill beam, and the transition sealing surface is in smooth butt-joint with the sealing surface formed at the bottom of the rear floor front section assembly and the sealing surface formed at the bottom of the sill beam, thereby improving a sealing effect and side impact resistance of the entire vehicle.
(2) The plurality of sealing reinforcement structures are disposed on the rear casting in the longitudinal direction, to meet the requirements of vehicle models with different wheelbases. This design enables the rear casting to be formed into a platform part, thereby improving the platform universalization rate.
(3) The portion, corresponding to the battery pack sealing strip, of the rear floor front section is recessed downward to form the transversely penetrating groove, which is connected with the sealing surface reinforcement member cooperatively to form the enclosed cavity structures in the vertical direction. This design enhances structural strength of the first sealing surface. The enclosed cavity structure corresponds to the sealing reinforcement structures on the two transverse sides, forming the continuous structure to meet the sealing requirements.

### Brief Description of the Drawings

Fig. 1 is a schematic structural diagram (top view) of a rear floor structure of the present disclosure;
Fig. 2 is a schematic structural diagram (bottom view) of a rear floor structure of the present disclosure;
Fig. 3 is an exploded structural diagram of a rear floor structure of the present disclosure;
Fig. 4 is a first schematic diagram of a structural evolution of a sealing portion in a rear floor structure of the present disclosure;
Fig. 5 is a second schematic diagram of a structural evolution of a sealing portion in a rear floor structure of the present disclosure;
Fig. 6 is a schematic diagram of a partial structure of a rear floor structure of the present disclosure;
Fig. 7 is a schematic diagram of a partial cross section of a rear floor structure of the present disclosure;
Fig. 8 is a schematic diagram of a cross section of a joint of a rear casting first longitudinal beam and a first sill beam;
Fig. 9 is a schematic structural diagram of a joint of a first lap joint edge and a first sill beam;
Fig. 10 is a schematic structural diagram of a joint of a second lap joint edge and a first sill beam;
Fig. 11 is a schematic diagram of a connecting structure of a rear floor front transverse beam assembly; and
Fig. 12 is a schematic diagram of a connecting structure of a rear floor front section.

Throughout the drawings, 1: rear floor front section assembly; 11: rear floor front section; 111: groove; 12: rear floor front transverse beam assembly; 121: rear floor front transverse beam; 122: rear floor first longitudinal beam; 123: rear floor second longitudinal beam; 124: sealing surface reinforcement member; 2: rear casting: 21: rear floor frame front section; 22: rear casting first longitudinal beam; 221: first lap joint edge; 222: second lap joint edge; 23: rear casting second longitudinal beam; 24: sealing reinforcement rib; 25: connecting flange; 3: first sill beam; 4: second sill beam; 5: battery pack sealing strip; 6: battery pack upper cover; 100: first hot-melt self-tapping screw; 200: second hot-melt self-tapping screw; 300: first rivet; 400: second rivet; 500: third rivet; 600: first bolt; 700: second bolt; A: first sealing surface; B: second sealing surface; and C: transition sealing surface.

### Detailed Description of the Embodiments

Implementations of the present disclosure will be described below with reference to the drawings and preferred embodiments. Those skilled in the art can easily understand other advantages and effects of the present disclosure from the content disclosed in the description. The present invention may be further implemented or applied through other different specific implementations, and the details in the description may also be modified or changed in various ways based on different viewpoints and applications without departing from the spirit of the present disclosure. It should be understood that the preferred embodiments are merely used for describing the present disclosure rather than limiting the scope of protection of the present disclosure.

It should be noted that the illustrations provided in the following embodiments are only schematic illustrations of the basic concept of the present disclosure, and thus the drawings only show components related to the present disclosure rather than being drawn according to the number, shape, and size of components in actual implementation. In actual implementation, the type, number, and proportion of each component may be changed arbitrarily, and the component layout may also be more complicated.

In the present disclosure, unless otherwise specified, the directional words used, such as "top, bottom, above, below, left, right, front, and rear", are all defined based on the top, bottom, above, below, left, right, front, and rear of a vehicle in a normal driving state. Specifically, the direction from the center of mass of the vehicle to the roof of the vehicle is top and above, the direction from the center of mass of the vehicle to the chassis of the vehicle is bottom and below, the direction from the center of mass of the vehicle to the front of the vehicle is front, the direction from the center of mass of the vehicle to the rear of the vehicle is rear, the direction from the right wheel of the vehicle to the left wheel of the vehicle is left, and the direction from the left wheel of the vehicle to the right wheel of the vehicle is right. In the following description, "transverse" refers to the left and right direction, "longitudinal" refers to the front and rear direction, and "interior and exterior" refer to the inside and outside of the contours of related spare parts. The directional descriptions of the embodiments of the present disclosure are all described based on the orientations of the embodiments of the present disclosure when the vehicle is in an assembled state. In addition, it should be noted that the terms used, such as "first" and "second", are intended to distinguish one element from another and do not have sequentiality and importance.

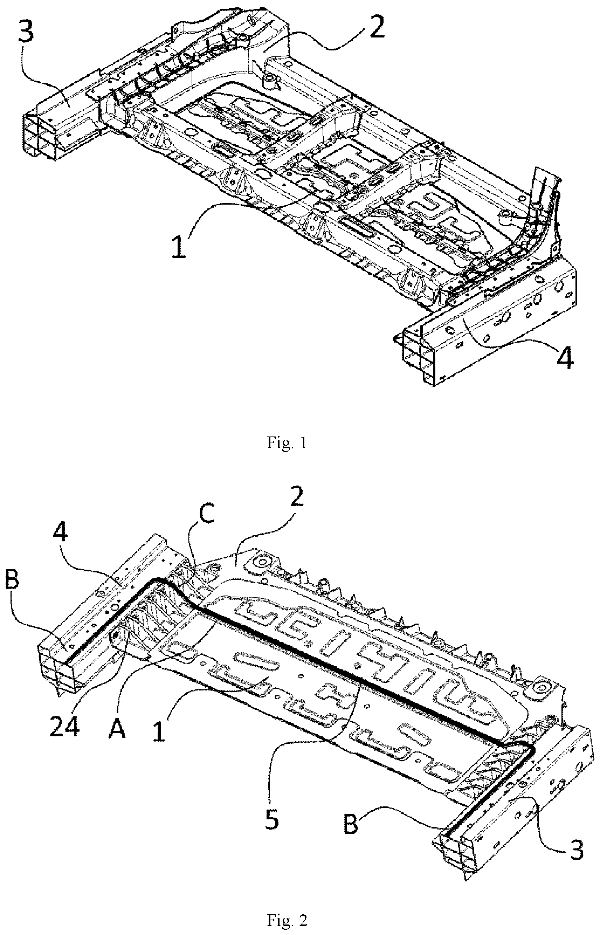

Refer to Fig. 1 to Fig. 12. In a first aspect, embodiments of the present disclosure provide a rear floor structure, which includes a rear floor front section assembly 1 and a rear casting 2. An accommodating space for accommodating the rear floor front section assembly 1 is formed at a front end of the rear casting 2. The rear floor front section assembly 1 is fixedly connected to the rear casting 2. Two transverse sides of the rear casting 2 are respectively connected to sill beams on two sides. A first sealing surface A for forming a seal with a battery pack assembly is formed at the bottom of the rear floor front section assembly 1, and a second sealing surface B for forming a seal with the battery pack assembly is formed at the bottom of each sill beam. The rear floor structure of the present disclosure is located above the battery pack assembly, and the first sealing surface A and the second sealing surface B are matched with a battery pack sealing strip 5 disposed on a battery pack upper cover 6 to seal a passenger compartment. The battery pack sealing strip 5 is transversely disposed on the first sealing surface A, and the battery pack sealing strip 5 is longitudinally disposed on the second sealing surface B in a length direction of the sill beam. A height difference is formed between the first sealing surface A and the second sealing surface B in a vertical direction. The battery pack sealing strip 5 needs to transition from the first sealing surface A to the second sealing surface B at a joint of the rear casting 2 and the sill beam, to switch from transverse sealing to longitudinal sealing. To enable the battery pack sealing strip 5 to fit the continuous sealing surface and ensure a sealing effect, in the embodiments of the present disclosure, a sealing reinforcement structure is disposed at a joint of the rear casting 2 and the sill beam. A transition sealing surface C is formed on the sealing reinforcement structure and is in butt-joint with the first sealing surface A and the second sealing surface B in the transverse direction. In this way, the battery pack sealing strip 5 continues to fit the transition sealing surface C in the transverse direction from the first sealing surface A, and the height position of the battery pack sealing strip 5 in the vertical direction is smoothly changed until the transition sealing surface C transitions the battery pack sealing strip 5 to a height position where the second sealing surface B is located. The battery pack sealing strip 5 can be turned to longitudinally seal the sill side beam, and the first sealing surface A, the transition sealing surface C, and the second sealing surface B collectively form a continuous smooth sealing surface, avoiding the problem of poor sealing caused by the height difference between the first sealing surface A of the rear floor front section assembly 1 and the second sealing surface B of the sill beam.

Refer to Fig. 1 and Fig. 2. In a preferred embodiment of the present disclosure, a plurality of sealing reinforcement structures are disposed at a joint of the rear casting 2 and the sill beam at intervals in a longitudinal direction and separately extend in the transverse direction. During vehicle model evolution, a position-adaptive sealing reinforcement structure may be selected according to a wheelbase of a vehicle model to strengthen the seal between the battery pack assembly and the rear floor structure of the present disclosure. This design enables the rear casting 2 to be formed into a platform part adaptable to vehicle models with different wheelbases, thereby improving the platform universalization rate. Further, the sealing reinforcement structures are sealing reinforcement ribs 24. The plurality of sealing reinforcement ribs 24 disposed on the two transverse sides of the rear casting 2 at intervals in the longitudinal direction can significantly enhance lateral rigidity of the real floor structure of the present disclosure, thereby improving side impact performance of the entire vehicle. Two ends of each sealing reinforcement rib 24 are respectively in butt-joint with the first sealing surface A and the second sealing surface B. Inclined planes of the sealing reinforcement ribs 24 form the transition sealing surface C. The inclined plane is easy to machine and manufacture, is in smooth butt-joint with the first sealing surface A and the second sealing surface B, and can well fit to the battery pack sealing strip 5, thereby ensuring a sealing effect.

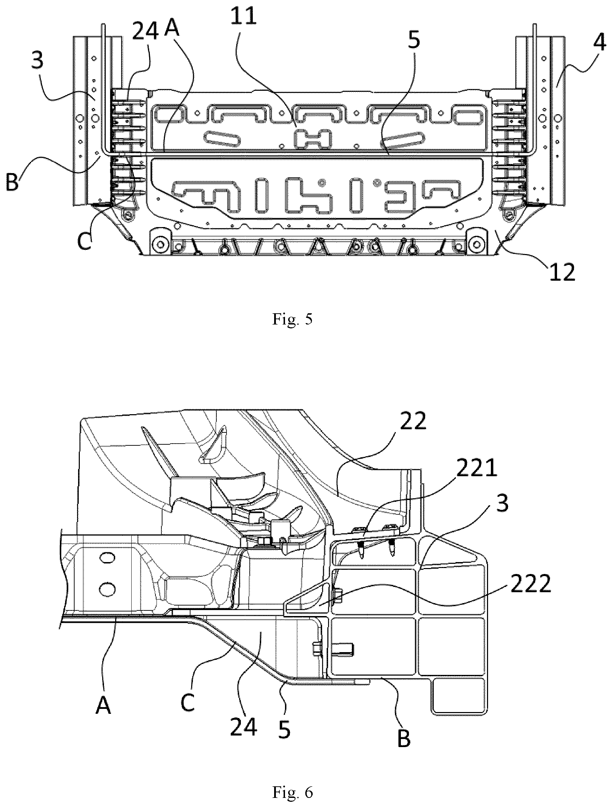

The sealing reinforcement rib 24 may be configured in a plurality of structural forms, such as a triangular reinforcement rib or a trapezoidal reinforcement rib. Preferably, a trapezoidal reinforcement rib is selected. Refer to Fig. 6. A cross section of the sealing reinforcement rib 24 is in an inverted trapezoidal shape, a longer lower base of the trapezoidal shape is located in the same plane as the first sealing surface A, and a shorter upper base of the trapezoidal shape is located in the same plane as the second sealing surface B. The transition sealing surface C is located in the same plane as legs of the trapezoidal shape. After the rear casting 2 is connected to the sill beam, the second sealing surface B at the bottom of the sill beam abuts against the plane where the upper base of the trapezoidal shape is located, and then smoothly transitions to the first sealing surface A in the transverse direction via the transition sealing surface C, to achieve a continuous smooth butt-joint of the first sealing surface A, the transition sealing surface C, and the second sealing surface B, thereby improving a sealing effect of the battery pack sealing strip 5. Further, a butting edge between the plane where the upper base of the trapezoidal shape is located and the transition sealing surface C may be designed with a fillet radius, to improve the fitness of the butting edge to the battery pack sealing strip 5, and avoid a sharp butting edge. This helps to prevent potential damage to the battery pack sealing strip 5 that may occur due to prolonged compression.

In the embodiments of the present disclosure, an included angle between the transition sealing surface C and the first sealing surface A preferably ranges from 135° to 150°. The first sealing surface A and the second sealing surface B are parallel or nearly parallel, to enable the included plane serving as the transition sealing surface to be in smooth butt-joint with the first sealing surface A and the second sealing surface B.

Refer to Fig. 2. A portion for forming a seal with the first sealing surface A of the battery pack sealing strip 5 is disposed in the transverse direction, and two transverse sides of the first sealing surface A are respectively connected to the second sealing surfaces B via the transition sealing surfaces C on the sealing reinforcement structures on left and right sides. In the embodiments of the present disclosure, the sealing reinforcement structures located on the two transverse sides of the rear casting 2 are symmetrically disposed. In this way, the transition sealing surfaces C on the left and right sides of the first sealing surface A are in a one-to-one correspondence. The sealing reinforcement structures corresponding to each other on the two transverse sides are matched with vehicle models with the same wheelbase, and a plurality of sets of sealing reinforcement structures adapt to vehicle models with different wheelbases.

Further, the plurality of sealing reinforcement structures on the same side are disposed at equal intervals in the longitudinal direction. By standardizing the longitudinal spacing distance, this design can facilitate adaptation to different vehicle models and improve platform universalization of rear casting. It should be noted that the wheelbase of the platform vehicle model may be alternatively pre-determined in the design stage, and longitudinal spacing distances between the sealing reinforcement structures are designed only for wheelbases of several vehicle models. In this way, the rear casting can be formed into a platform part adaptable to the wheelbases of the vehicle models. Longitudinal spacing distances between adjacent sealing reinforcement structures may be equal or different.

Refer to Fig. 1 to Fig. 3. In the embodiments of the present disclosure, the rear casting 2 includes a rear floor frame front section 21, a rear casting first longitudinal beam 22, and a rear casting second longitudinal beam 23. The rear casting first longitudinal beam 22 and the rear casting second longitudinal beam 23 are disposed on two transverse sides of the rear floor frame front section 21, to collectively form a U-shaped accommodating space with the rear floor frame front section 21. The accommodating space is connected to the rear floor front section assembly 1 and covers the rear floor front section assembly 1, thereby improving bending stiffness and torsional stiffness of the rear casting 2, improving the integration level of the rear casting 2, and reducing lap joints between the spare parts. The bill beams include a first sill beam 3 and a second sill beam 4 that are symmetrically disposed in the transverse direction. The rear casting first longitudinal beam 22 on the right is laterally connected to the first sill beam 3, and the rear casting second longitudinal beam 23 on the left is laterally connected to the second sill beam 4. The first sill beam 3 and the second sill beam 4 are preferably extruded aluminum structures to meet the lightweight requirements for the entire vehicle.

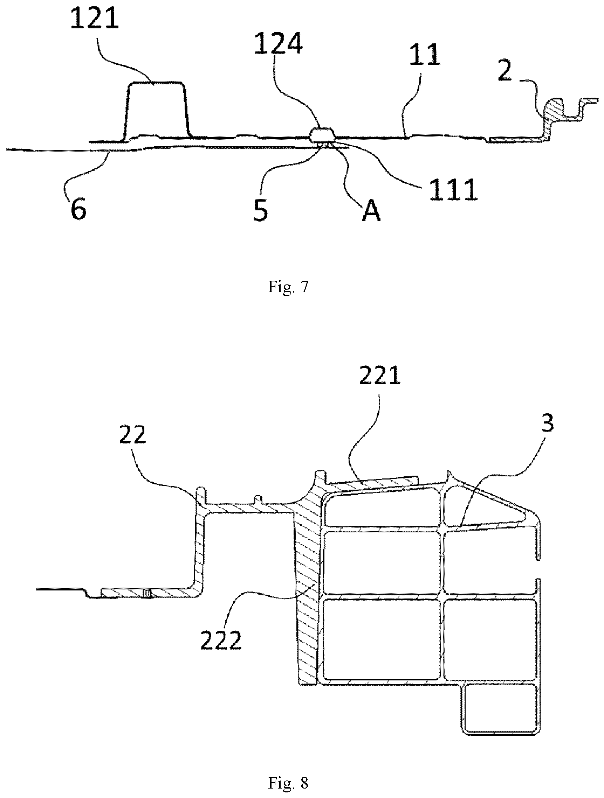

In the embodiments of the present disclosure, the rear casting first longitudinal beam 22 and the rear casting second longitudinal beam 23 are symmetrically structured, and the first sill beam 3 and the second sill beam 4 are symmetrically structured. Refer to Fig. 6 and Fig. 8, the rear casting first longitudinal beam 22 includes a first lap joint edge 221 and a second lap joint edge 222. The first lap joint edge 221 is connected to a top portion of the first sill beam 3, the second lap joint edge 222 is connected to a side portion of the first sill beam 3. Mutual engagement of the first lap joint edge 221 and the second lap joint edge 222 facilitates assembly between the rear casting first longitudinal beam 22 and the first sill beam 3, thereby achieving a fixed connection between the rear casting first longitudinal beam and the first sill beam. Moreover, this design reduces the number of required connecting members, and improves bending stiffness and side impact performance at the joint.

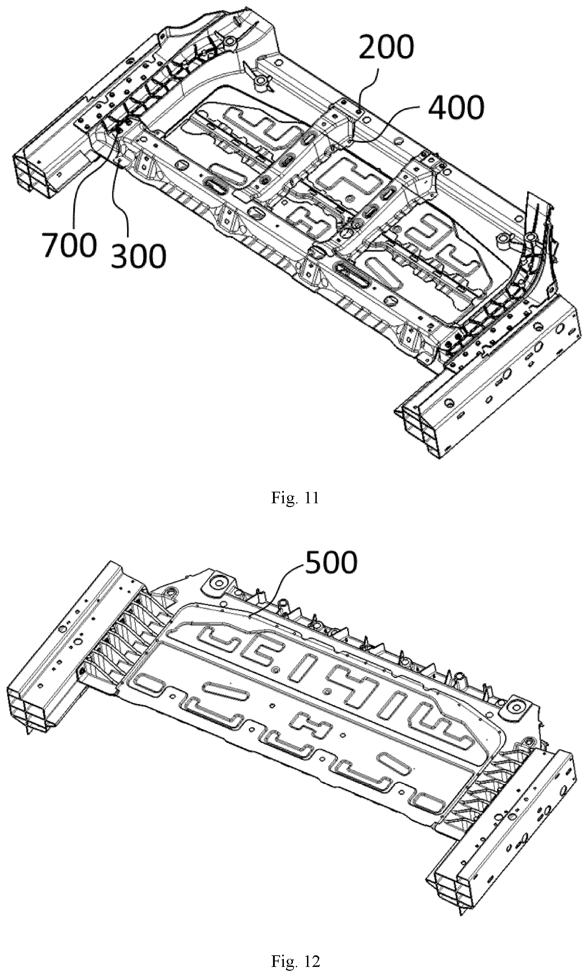

Refer to Fig. 1 to Fig. 3. In the embodiments of the present disclosure, the rear floor front section assembly 1 includes a rear floor front section 11 and a rear floor front transverse beam assembly 12. The rear floor front transverse beam assembly 12 is fixedly connected to the rear floor front section 11, to enhance the overall structural strength of the rear floor front section assembly 1. The first sealing surface A is formed at the bottom of the rear floor front section 11. A connecting flange 25 is formed on a side, where the rear floor frame front section 21, the rear casting first longitudinal beam 22, and the rear casting second longitudinal beam 23 are located, of the accommodating space, an edge of the rear floor front section 11 is connected to a lower end surface of the connecting flange 25, and an edge of the rear floor front transverse beam assembly 12 is connected to an upper end surface of the connecting flange 25. The rear floor front section 11 is disposed on the lower end surface of the connecting flange 25, thereby effectively avoiding the impact of the thickness of the connecting flange 25 on smoothness of the joint of the transition sealing surface C and the first sealing surface A, making a sealing height of the battery pack sealing strip 5 at a joint of the edge of the rear floor front section 11 and the connecting flange 25 more uniform, and ensuring sealing reliability. Refer to Fig. 12. The edge of the rear floor front section 11 is fixedly connected to the connecting flange 25 via third rivets 500 by self-piercing riveting (SPR). Furthermore, structural adhesive is applied between the connecting surfaces of the connecting flange 25 and the rear floor front section 11, to enhance durability and fatigue resistance of the joint.

Refer to Fig. 1 to Fig. 3 and Fig. 6. In the embodiments of the present disclosure, the second lap joint edge 222 extends downward beyond the lower end surface of the connecting flange 25, and the sealing reinforcement ribs 24 (the sealing reinforcement structures) are disposed between a lower portion of the second lap joint edge 222 and the connecting flange 25. This design can improve lateral rigidity of the joint of the rear casting first longitudinal beam 22 and the first sill beam 3, and enable the transition sealing surface C of the sealing reinforcement ribs 24 to be in smooth butt-joint with the first sealing surface A and the second sealing surface B.

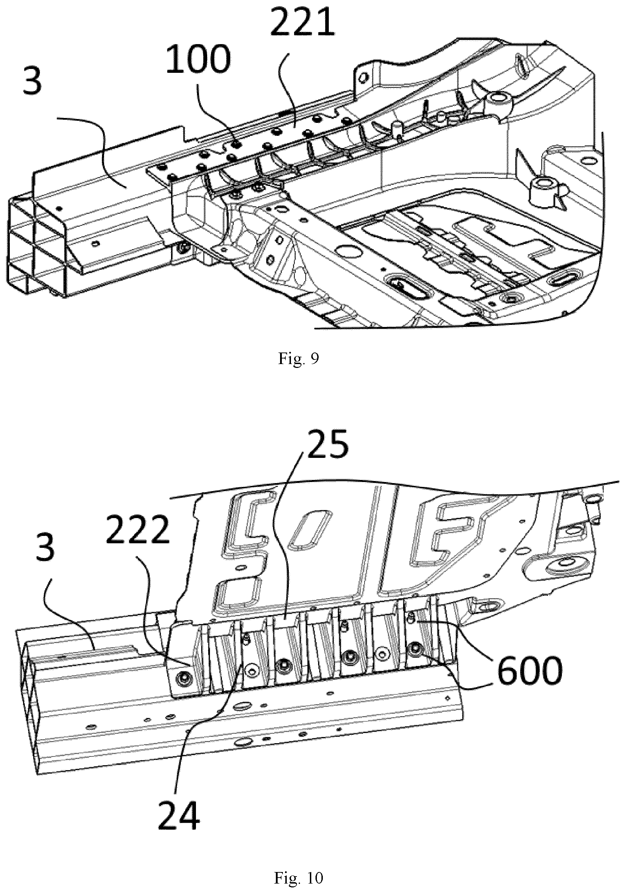

Refer to Fig. 9. In the embodiments of the present disclosure, the first lap joint edge 221 is connected to a top end surface of the first sill beam 3 via first hot-melt self-tapping screws 100, and 11 first hot-melt self-tapping screws 100 are disposed in two rows for fixed connection. Furthermore, the structural adhesive is applied in an S shape to a connection area to ensure strength of the connection area.

Refer to Fig. 10. In the embodiments of the present disclosure, the second lap joint edge 222 is connected to a side end surface of the first sill beam 3 via first bolts 600. To ensure durability and fatigue resistance of the joint, the first bolts 600 are disposed in two rows. Because the second lap joint edge 222, the connecting flange 25, and the sealing reinforcement ribs 24 form a plurality of semi-enclosed spaces, considering assembly feasibility, the first bolts 600 in the upper row are disposed in the transverse direction from the first sill beam 3 to the second lap joint edge 222. Through holes are formed in the first sill beam 3, to ensure assembly feasibility. The first bolts 600 in the lower row are disposed in the transverse direction from the second lap joint edge 222 to the first sill beam 3.

Refer to Fig. 1 to Fig. 3 and Fig. 11. In the embodiments of the present disclosure, the rear floor front transverse beam assembly 12 includes a rear floor front transverse beam 121, a rear floor first longitudinal beam 122, and a rear floor second longitudinal beam 123. The rear floor front transverse beam assembly 12 is integrally connected to the rear floor front section 11 by spot welding, the rear floor front transverse beam 121 is connected to a front end of the rear floor first longitudinal beam 122 and a front end of the rear floor second longitudinal beam 123, and the rear floor front transverse beam 121, the rear floor first longitudinal beam 122, and the rear floor second longitudinal beam 123 are connected to each other to form a π-shaped frame structure, which is made of a hot-stamping material (such as boron steel) and can significantly enhance structural strength of the rear floor front section 11. Two transverse ends of the rear floor front transverse beam 121 are respectively in lap joint with the rear casting first longitudinal beam 22 and the rear casting second longitudinal beam 23, to form a transverse force transferring path, thereby improving lateral rigidity and side impact performance of the overall vehicle. The rear floor front transverse beam is fixedly connected to the rear casting first longitudinal beam and the rear casting second longitudinal beam via second bolts 900 in lap joint areas. Bottom portions of the two ends of the rear floor front transverse beam 121 are fixedly connected to the connecting flange 25 via first rivets 300 by SPR. Moreover, structural adhesive is applied to the lap joint areas, to enhance durability and fatigue resistance at the joints. A rear end of the rear floor first longitudinal beam 122 and a rear end of the rear floor second longitudinal beam 123 are in lap joint with the rear floor frame front section 21. Lap joint edges are formed at the rear ends of both the rear floor first longitudinal beam and the rear floor second longitudinal beam, and are in lap joint with and fixedly connected to the rear floor frame front section 21 via second hot-melt self-tapping screws 200. Furthermore, bottom portions of the read ends of the rear floor first longitudinal beam 122 and the rear floor second longitudinal beam 123 are fixedly connected to the connecting flange 25 via second rivets 400 by SPR. Moreover, structural adhesive is applied to the lap joint areas, to enhance durability and fatigue resistance at the joints.

In an exemplary embodiment, the rear floor frame front section 21, the rear casting first longitudinal beam 22, the rear casting second longitudinal beam 23, and the sealing reinforcement structures (the sealing reinforcement ribs 24) are made of aluminum alloy and integrally formed. By utilizing the advantages of casting process, manufacturing precision of the rear casting 2 is ensured. This design significantly improves installation precision of the rear casting 2 and the rear floor front section assembly 1 and precision of all installation points of the sill beam, thereby effectively improving loading performance and structural strength of the entire vehicle.

Refer to Fig. 1 to Fig. 3 and Fig. 7. In the embodiments of the present disclosure, a portion, corresponding to the battery pack sealing strip 5, of the rear floor front section 11 is recessed downward to form a groove 111 that transversely penetrates through the rear floor front section 11. A bottom surface of the groove 111 serves as the first sealing surface A. Two ends of the groove 111 correspond to the sealing reinforcement ribs 24 on the two sides, to achieve good transition from the first sealing surface A to the transition sealing surfaces C on the two transverse sides. Moreover, the concave structure of the groove 111 can increase the structural strength of the first sealing surface A, and can allow the first sealing surface A to well fit the battery pack sealing strip 5 to meet the sealing requirements. A gap is reserved between the battery pack upper cover 6 and the first sealing surface A, to provide a sealing space for the battery pack sealing strip 5. The battery pack sealing strip 5 is preferably made of polyethylene (PE) material, with a thickness of 8 mm and a compression allowance of 3 mm, to ensure good sealing performance.

Refer to Fig. 7. Further, in the embodiments of the present disclosure, the rear floor front transverse beam 12 includes a sealing surface reinforcement member 124 that is disposed in the transverse direction. The sealing surface reinforcement member 124 transversely penetrates through the rear floor first longitudinal beam 122 and the rear floor second longitudinal beam 123. The sealing surface reinforcement member 124 is an upwardly protruding structure corresponding to the groove 111. The sealing surface reinforcement member 124 is located above and connected to the groove 111. The sealing surface reinforcement member is connected with the groove cooperatively to form an enclosed cavity structure in a vertical direction. The enclosed cavity in the vertical direction forms a transversely penetrating reinforcement rib structure that is in butt-joint with the corresponding sealing reinforcement ribs on the two transverse sides, to form a continuous structure. This design further enhances structural strength of the first sealing surface A, to avoid deformation of the first sealing surface A, which may impact the sealing effect.

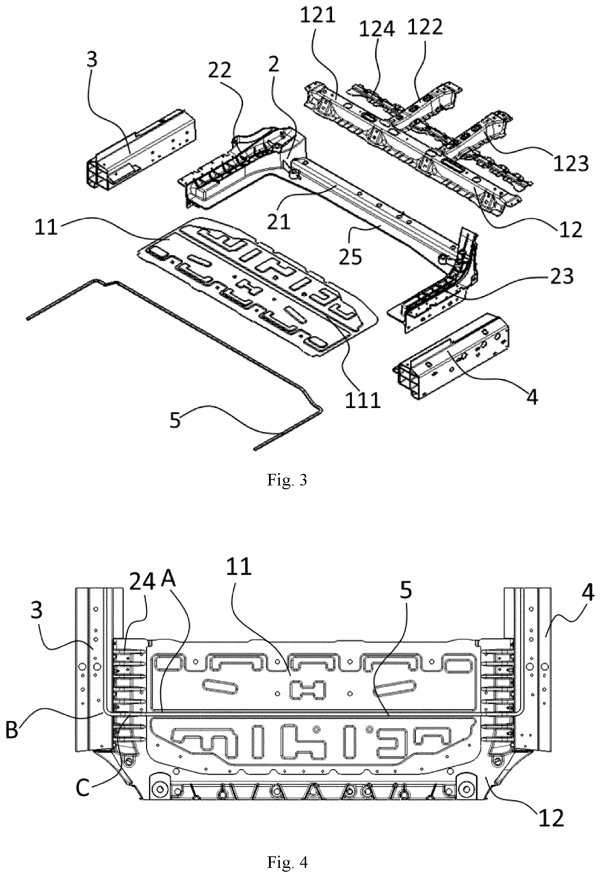

Refer to Fig. 4 and Fig. 5. In some exemplary embodiments of the present disclosure, in an orientation shown in Fig. 4 and Fig. 5, 8 sets of sealing reinforcement ribs 24 are disposed on the rear casting 2 from top to bottom, and the sealing reinforcement ribs 24 on the same side are disposed at equal intervals of 50 mm in the longitudinal direction. In this way, the sealing surface can be longitudinally adjusted to meet the requirements of vehicle models with different wheelbases. As shown in Fig. 4, the two ends of the groove 111 on the rear floor front section 11 respectively correspond to a fifth set of sealing reinforcement ribs 24. The first sealing surface A is in smooth butt-joint with the second sealing surfaces B on the two sides via the transition sealing surface C on the two transverse sides, and the first sealing surface A, the second sealing surfaces B, and the transition sealing surfaces C collectively form a continuous sealing surface. This design enables the battery pack sealing strip 5 to fit the continuous sealing surface, thereby ensuring a sealing effect. When the vehicle model corresponding to Fig. 4 evolves, that is, in a case that the wheelbase is increased by 50 mm but the battery pack assembly is kept unchanged, as shown in Fig. 5, the lap joint of the rear casting 2 with the rear floor front section assembly 1 is kept unchanged, and the groove 111 of the rear floor front section 11 evolves, to make the two ends of the groove 111 respectively correspond to a fourth set of sealing reinforcement ribs 24, so as to form a continuous sealing surface for fitting the battery pack sealing strip 5 and ensure a sealing effect. By analogy, when the vehicle model undergoes subsequent evolution, that is, the wheelbase is changed, the rear floor front section 11 may be taken as a special part, and a sealing position is determined according to the wheelbase of the vehicle model, to form a corresponding groove 111 that is in butt-joint with the sealing reinforcement ribs 24 on the two sides. In this way, the sealing surface at the bottom of the rear floor front section assembly 1 and the sealing surface at the bottom of the sill beam form a continuous smooth sealing surface, thereby addressing the problem of discontinuous sealing caused by a height difference between the rear floor front section assembly 1 and the sill beam. Moreover, the plurality of sets of the sealing reinforcement ribs 24 are disposed on the two transverse sides of the rear casting 2. This design enables the rear casting 2 to be formed into a platform part adaptable to vehicles with different wheelbases, thereby improving the platform universalization rate.

To provide a better understanding of the technical concept of the present disclosure, the present disclosure is described with reference to relatively comprehensive technical features.

Refer to Fig. 1 to Fig. 12. Preferred embodiments of the present disclosure provide a rear floor structure, which includes a rear floor front section assembly 1 and a rear casting 2. The rear casting 2 is formed by connecting a rear floor frame front section 21, a rear casting first longitudinal beam 22, and the rear casting second longitudinal beam 23. The rear casting first longitudinal beam 22 and the rear casting second longitudinal beam 23 are disposed on two transverse sides of the rear floor frame front section 21, to form a U-shaped accommodating space for accommodating the rear floor front section assembly 1. The rear casting first longitudinal beam 22 on the right is laterally connected to a first sill beam 3, and the rear casting second longitudinal beam 23 on the left is laterally connected to a second sill beam 4. The rear floor front section assembly 1 includes a rear floor front section 11 and a rear floor front transverse beam assembly 12. The rear floor front transverse beam assembly 12 is secured to the rear floor front section 11 to enhance structural strength. A first sealing surface A for forming a seal with a battery pack assembly is formed at the bottom of the rear floor front section 11, a second sealing surface B for forming seals with the battery pack assembly are respectively formed at the bottom of the first sill beam 3 and the bottom of the second sill beam 4. Sealing reinforcement ribs 24 are disposed on the rear casting first longitudinal beam 22 and the rear casting second longitudinal beam 23 at intervals in a longitudinal direction and extend in the transverse direction. Inclined planes of the sealing reinforcement ribs 24 can serve as transition sealing surfaces C that are in smooth butt-joint with the first sealing surface A and the second sealing surfaces B in the transverse direction. In this way, the first sealing surface A and the second sealing surfaces B between which height differences exist form a continuous smooth sealing surface via the transition sealing surfaces C. A connecting flange 25 is formed on a side, where the rear floor frame front section 21, the rear casting first longitudinal beam 22, and the rear casting second longitudinal beam 23 are located, of the accommodating space, an edge of the rear floor front section 11 is connected to a lower end surface of the connecting flange 25, and an edge of the rear floor front transverse beam assembly 12 is connected to an upper end surface of the connecting flange 25. The rear casting first longitudinal beam 22 includes a first lap joint edge 221 in lap joint with a top portion of the second sill beam 3, and a second lap joint edge 222 in lap joint with a side portion of the first sill beam 3. The second lap joint edge 222 extends downward beyond the lower end surface of the connecting flange 25. The sealing reinforcement ribs 24 are disposed between a lower portion of the second lap joint edge 222 and the connecting flange 25. The rear casting second longitudinal beam 23 and the rear casting first longitudinal beam 22 are symmetrically structured. A portion, corresponding to a battery pack sealing strip 5, of the rear floor front section 11 is recessed downward to form a groove 111 that transversely penetrates through the rear floor front section 11. A bottom surface of the groove 111 serves as the first sealing surface, and two ends of the groove 111 correspond to the sealing reinforcement ribs 24 on the two sides. The rear floor front transverse beam assembly 12 includes a sealing surface reinforcement member 124 that is disposed in the transverse direction. The sealing surface reinforcement member 124 is an upwardly protruding structure corresponding to the groove 111. The sealing surface reinforcement member 124 is connected with the groove 111 cooperatively to form an enclosed cavity structure in a vertical direction, thereby enhancing structural strength of the first sealing surface A.

Based on the technical solutions, the problems in the prior art that a sealing effect at a joint cannot be ensured because a height difference exists between the sealing surface of the rear floor assembly of the vehicle body and the sealing surface of the sill beam, and the rear casting cannot meet the sealing requirements of vehicles with different wheelbases and cannot achieve platform universalization are addressed. In the present disclosure, the sealing reinforcement ribs 24 on the rear casting 2 form the transition sealing surfaces C that in smooth butt-joint with the first sealing surface at the bottom of the rear floor front section 11 and the second sealing surface B at the bottom of the sill beam in the transverse direction. This design achieves a continuous smooth sealing surface at the bottom of the rear floor structure that is used for fitting the battery pack sealing strip 5 to form a sealing structure, thereby ensuring a sealing effect. Moreover, the plurality of sealing reinforcement ribs 24 are disposed at intervals in the longitudinal direction. During vehicle model evolution, suitable sealing reinforcement ribs 24 are selected to form a sealing structure according to a wheelbase of a corresponding vehicle, thereby achieving a high platform universalization rate. Furthermore, the plurality of sealing reinforcement ribs 24 disposed on the two sides of the rear casting 2 can improve lateral rigidity of the rear floor structure, thereby improving side impact performance of the entire vehicle. In addition, the concave groove 111 is formed in the rear floor front section 11, and the bottom surface of the groove 111 is taken as the first sealing surface A. This design facilitates smooth butt-joint of the first sealing surface A with the transition sealing surfaces C. The groove is connected with the upwardly protruding sealing surface reinforcement member 124 cooperatively to form the enclosed cavity structure in the vertical direction. This design can further enhance structural strength of the first sealing surface A, thereby ensuring a sealing effect of the first sealing surface A.

In a second aspect, the embodiments of the present disclosure provide a rear floor structure rear casting. The rear casting is the rear casting 2 in the rear floor structure according to the first aspect of the present disclosure. The sealing reinforcement structures disposed on the two transverse sides of the rear casting 2 form the transition sealing surface C that is in butt-joint with the sealing surface at the bottom of the rear floor front section assembly 1 and the sealing surface at the bottom of the sill beam, thereby addressing the problem of a discontinuous sealing surface caused by a height difference between the rear floor front section assembly 1 and the sill beam, and ensuring sealing performance of a passenger compartment. In addition, a plurality of sealing reinforcement structures may be disposed on the rear casting 2 in a longitudinal direction, to meet the requirements of vehicle models with different wheelbases. This design enables the rear casting to be formed into a platform part, thereby improving the platform universalization rate.

In a third aspect, the embodiments of the present disclosure provide a vehicle, which includes a vehicle body. The vehicle body includes the rear floor structure according to the first aspect of the present disclosure or the rear floor structure rear casting according to the second aspect of the present disclosure. Therefore, the vehicle has all beneficial effects of the rear floor structure or the rear floor structure rear casting, and the details are not described again herein.

The foregoing embodiments are preferred embodiments listed for the purpose of thoroughly describing the present disclosure, but the scope of protection of the present disclosure is not limited thereto. Equivalent substitutions or changes made by those skilled in the art based on the present disclosure fall within the scope of protection of the present disclosure.

## Claims

1. A rear floor structure, comprising: a rear floor front section assembly (1) and a rear casting (2), wherein an accommodating space for accommodating the rear floor front section assembly (1) is formed at a front end of the rear casting (2), two transverse sides of the rear casting (2) are respectively connected to sill beams on two sides, a first sealing surface (A) for forming a seal with a battery pack assembly is formed at the bottom of the rear floor front section assembly (1), a second sealing surface (B) for forming a seal with the battery pack assembly is arranged at the bottom of each sill beam, a height difference is formed between the first sealing surface and each second sealing surface (B), a sealing reinforcement structure is disposed at a joint of the rear casting (2) and the bill seam, a transition sealing surface (C) is formed on the sealing reinforcement structure, and the transition sealing surface (C) is in smooth butt-joint with the first sealing surface (A) and the second sealing surface (B) in a transverse direction.

2. The rear floor structure according to claim 1, wherein a plurality of sealing reinforcement structures are disposed at the joint of the rear casting (2) and the sill beam at intervals in a longitudinal direction and separately extend in the transverse direction, the sealing reinforcement structures are sealing reinforcement ribs (24), two ends of each sealing reinforcement rib (24) are respectively in butt-joint with the first sealing surface (A) and the second sealing surface (B), and inclined planes of the sealing reinforcement ribs (24) form the transition sealing surface (C).

3. The rear floor structure according to claim 2, wherein a cross section of each sealing reinforcement rib (24) is in an inverted trapezoidal shape, a lower base of the trapezoidal shape is located in the same plane as the first sealing surface (A), and an upper base of the trapezoidal shape is located in the same plane as the second sealing surface (B).

4. The rear floor structure according to claim 2, wherein an included angle between the transition sealing surface (C) and the first sealing surface (A) ranges from 135° to 150°.

5. The rear floor structure according to any one of claims 1 to 4, wherein the sealing reinforcement structures on the two transverse sides of the rear casting (2) are disposed symmetrically.

6. The rear floor structure according to claim 5, wherein the plurality of sealing reinforcement structures on the same side are disposed at equal intervals in the longitudinal direction.

7. The rear floor structure according to claim 1, wherein the rear casting (2) comprises a rear floor frame front section (21), a rear casting first longitudinal beam (22), and a rear casting second longitudinal beam (23), the rear casting first longitudinal beam (22) and the rear casting second longitudinal beam (23) are respectively disposed on two transverse sides of the rear floor frame front section (21), to form the accommodating space, the sill beams comprise a first sill beam (3) and a second sill beam (4) that are disposed symmetrically in the transverse direction, the rear casting first longitudinal beam (22) is laterally connected to the first sill beam (3), and the rear casting second longitudinal beam (23) is laterally connected to the second sill beam (4).

8. The rear floor structure according to claim 7, wherein the rear casting first longitudinal beam (22) and the rear casting second longitudinal beam (23) are symmetrically structured, the first sill beam (3) and the second sill beam (4) are symmetrically structured, the rear casting first longitudinal beam (22) comprises a first lap joint edge (221) and a second lap joint edge (222), the first lap joint edge (221) is connected to a top portion of the first sill beam (3), and the second lap joint edge (222) is connected to a side portion of the first sill beam (3).

9. The rear floor structure according to claim 8, wherein the rear floor front section assembly (1) comprises a rear floor front section (11) and a rear floor front transverse beam assembly (12), the rear floor front transverse beam assembly (12) is fixedly connected to the rear floor front section (11), the first sealing surface (A) is formed at the bottom of the rear floor front section (11), a connecting flange (25) is formed on a side, where the rear floor frame front section (21), the rear casting first longitudinal beam (22), and the rear casting second longitudinal beam (23) are located, of the accommodating space, an edge of the real floor front section (11) is connected to a lower end surface of the connecting flange (25), and an edge of the rear floor front transverse beam assembly (12) is connected to an upper end surface of the connecting flange (25).

10. The rear floor structure according to claim 9, wherein the second lap joint edge (222) extends downward beyond the lower end surface of the connecting flange (25), and the sealing reinforcement structures are disposed between a lower portion of the second lap joint edge (222) and the connecting flange (25).

11. The rear floor structure according to claim 9, wherein the rear floor front transverse beam assembly (12) comprises a rear floor front transverse beam (121), a rear floor first longitudinal beam (122), and a rear floor second longitudinal beam (123), the rear floor front transverse beam (121) is connected to a front end of the rear floor first longitudinal beam (122) and a front end of the rear floor second longitudinal beam (123), two transverse ends of the rear floor front transverse beam (121) are respectively in lap-joint with the rear casting first longitudinal beam (22) and the rear casting second longitudinal beam (23), and a rear end of the rear floor first longitudinal beam (122) and a rear end of the rear floor second longitudinal beam (123) are in lap-joint with the rear floor frame front section (21).

12. The rear floor structure according to claim 11, wherein a portion, corresponding to a battery pack sealing strip (5), of the rear floor front section (11) is recessed downward to form a groove (111) that transversely penetrates through the rear floor front section (11), a bottom surface of the groove (111) serves as the first sealing surface (A), the rear floor front transverse beam assembly (12) further comprises a sealing surface reinforcement member (124) disposed in the transverse direction, the sealing surface reinforcement member (124) is an upwardly protruding structure corresponding to the groove (111), and the sealing surface reinforcement member (124) is connected with the groove (111) cooperatively to form an enclosed cavity structure in a vertical direction.

13. The rear floor structure according to any one of claims 7 to 12, wherein the rear flooring frame front section (21), the rear casting first longitudinal beam (22), the rear casting second longitudinal beam (23), and the sealing reinforcement structures are integrally formed.

14. A rear floor structure rear casting, wherein the rear casting is the rear casting (2) in the rear floor structure according to any one of the claims 1 to 13.

15. A vehicle, comprising: a vehicle body, wherein the vehicle body comprises the rear floor structure according to any one of claims 1 to 13 or the rear flooring structure rear casting according to claim 14.
